# EUROPEAN PATENT APPLICATION

(11) **EP 0 725 288 A1**
(43) Date of publication of application: **07.08.1996**
(21) Application number: 95200264.0
(22) Date of filing: 03.02.1995
(51) Int. Cl.: G02B 6/38

(54) **Optical connector**

(71) Applicant: ALCATEL BELL Naamloze Vennootschap, B-2018 Antwerpen 1 (BE)
(72) Inventor: Leyssens, François Jeanne Charles, B-2640 Mortsel (BE)

(57) **Abstract**

The present invention discloses and optical connector for coupling optical conductors. The optical connector includes two mating parts which house corresponding optical fibres. The first and the second connector part have touching flat surfaces via which the corresponding fibres are coupled. The first part includes two clips (SA1,CE1,PE1 and SA2,CE2,PE2) which clamp two corresponding positioning pins of the second connector part. Both pins are cylindrical and their longitudinal axis is perpendicular to the touching flat surfaces. The first clip exerts a first set of two forces on the first positioning pin and the second clip exerts a second set of three forces on the second positioning pin when both connector parts are clamped together. Each set of forces is in equilibrium.

## Description

The present invention relates to an optical connector for coupling optical conductors.

Such an optical connector is well known in the art under many different embodiments. The present invention is used fiber for board applications wherein the board houses a set of optical fibers fixed in a first optical connector part and which are to be coupled to corresponding fibers in a second optical connector part. The second optical connector part e.g. provides an external link for the latter fibers. For such an application the positioning tolerances are very critical for the correct operation of the overal optical connector i.e. to have optimal coupling of the fibres.

An object of the present invention is to provide an optical connector for fiber in board applications, which realized in such a way that the desired positioning tolerances for correct operation are satisfied.

This object is achieved by the optical connector as described in claim 1.

In this way, the first and second sets of forces establish a correct positioning and tight clamp of the first and second optical connector parts and the optical conductors may be coupled through the touching flat surfaces.

Indeed, in each set of forces there is one action force, and in the first and second set there is one reaction force and two reaction forces respectively. In total three reaction forces are sufficient to position both parts with the desired tolerance.

An important advantage of the optical connector according to the invention is that no reaction forces are exerted by the second part i.e. via the two positioning pins. Indeed, as both set of forces are in equilibrium, the resulting force on each of the positioning pins is zero and therefor, no reaction force is exerted by the second part on the positioning pins. As the latter positioning pins are usually fixed to the fiber board with or, in a plastic substance layered onto the board, a possible reaction force exerted by the board on one of the positioning pins would result in stress forces imposed on the plastic substance and could eventually cause so called 'cold flow' or deformation of the plastic. The result is then that the tight clamp is lost because the position of one of the positioning pins changed and thus the correct operation of the overal optical connector is no longer guaranteed.

Another characteristic feature of the present invention is described in claim 2.

In this way, there is no action force exerted by the first part along the Y-axis and either the first or the second part of the optical connector may be retracted along this Y-axis to unclamp.

A further characteristic of the present invention is featured in claim 3.

In this way, the above forces are realized upon clamping, and the first and second parts are either clamped together or not clamped at all. Moreover, the clamped parts are to be retracted from each other along the Y axis using a retraction force larger than a threshold force determined by the shape of the curved ends and the positioning ends, and the force of both resilient arms. If the above retraction force is smaller than the latter threshold force, both parts stay clamped together. The same is true for the reverse situation where the parts are forced into the clamped position.

The above mentioned and other objects and features of the invention will become more apparent and the invention itself will be best understood by referring to the following description of an embodiment taken in conjunction with the accompanying drawings wherein :
Fig 1 shows a spacial view of a board with fibers comming out of that board;
Fig 2 depicts a spacial upside down view of an optical connector part terminating a link of optical fibers;
Fig 3 gives a top view of positioning pins which are clamped and positioned by two clips according to the invention.

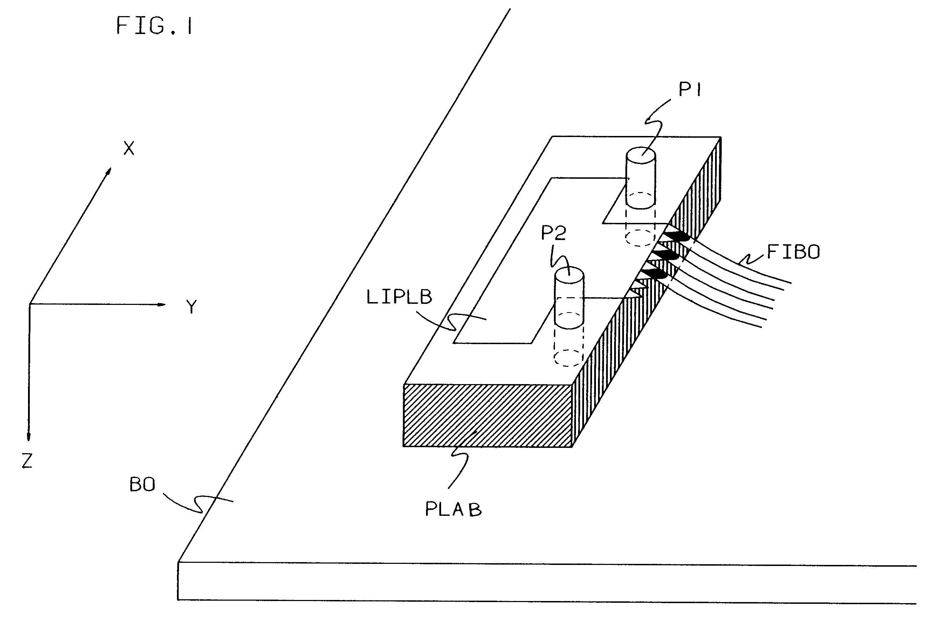

Fig 1 shows a circuit board BO whereon a so called LIGA plate LIPLB is mounted using a plastic intermediate layer PLAB. The LIGA plate LIPLB provides precision grooves in one edge wherein a set of fibers FIBO are positioned and fixed. The board BO, the LIGA plate LIPLB with the fibers FIBO fixed to it and the plastic layer PLAB constitute a first optical connector part. The fibers are embedded in the board BO and are comming out of the board under an angle of 45 degrees. The ends of the fibers are polished parallel to the upper surface of the LIGA plate LIPLB.

In this way, the fibers FIBO are positioned and fixed in an array providing oval crosssections of the latter fibers. Indeed, the fibers terminate in the precision grooves of the LIGA plate LIPLB under an angle of 45 degrees and as the ends are polished, oval crosssections of the fibers are obtained.

Fig 1 further shows two positioning pins P1 and P2 which are also positioned and fixed in the plastic layer PLAB in such a way that the fibers FIBO positioned in the precision grooves lie in between the two positioning pins P1 and P2. The LIGA plate LIPLB has two square indentations with the precision grooves also lying in between the latter indentations. The pins P1 and P2 are small cylinders used in commercial bearers. Such cylinders are very cheap and are manufactured with a precision up to 1 nm. The LIGA plate LIPLB is positioned with respect to these pins P1 and P2 in such a way that the first pin P1 touches two sides of the first square indentations and that the second pin P2 touches only one side of the second square indentation. The LIGA technology provides these square indentations with enormeous precision so that the plate LIPLB is positioned with sufficient precision with respect to the positioning pins P1 and P2. There is only one possible position of the plate LIPLB when three touching points are used to position the plate LIPLB with respect to the positioning pins P1 and P2. Fig 1 also shows an orthognal X,Y,Z axis system used as a spacial reference.

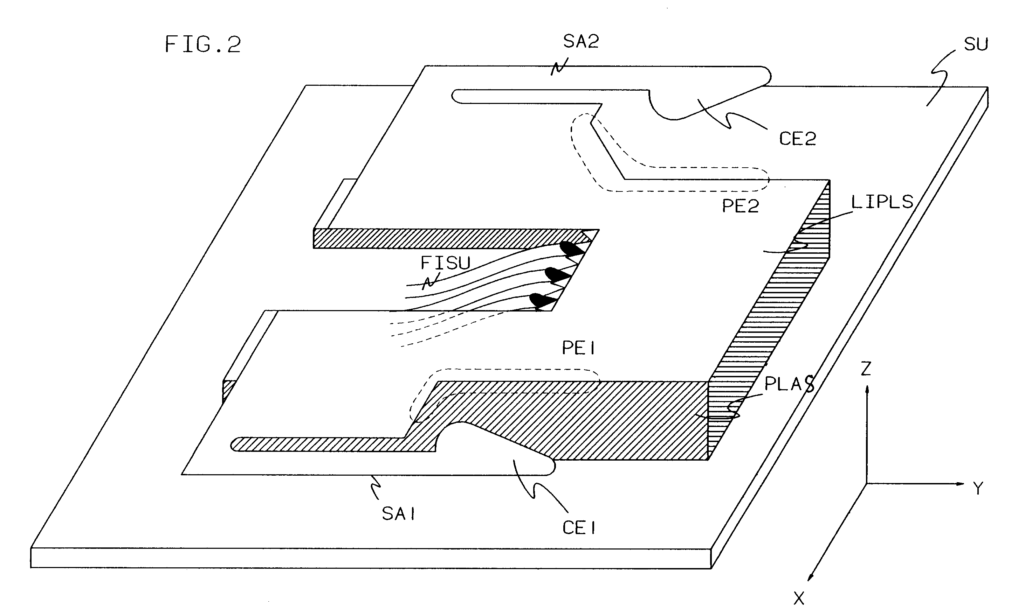

Fig 2 shows a second optical connector part comprising a substrate SU whereon a LIGA plate LIPLS is mounted using a plastic layer PLAS. The LIGA plate LIPLS is substantially U-shaped and has precision grooves between both legs of the U-shape. The precision grooves are substantially like the above mentioned grooves of the LIGA plate LIPLB. The optical fibers fibers FISU provided by a fiber strip (not shown) are fixed and positioned in the latter precision grooves in substantially the same way as the above mentioned optical fibers FIBO, i.e. under an angle of 45 degrees, and polished parallel to the upper surface of the plate LIPLS.

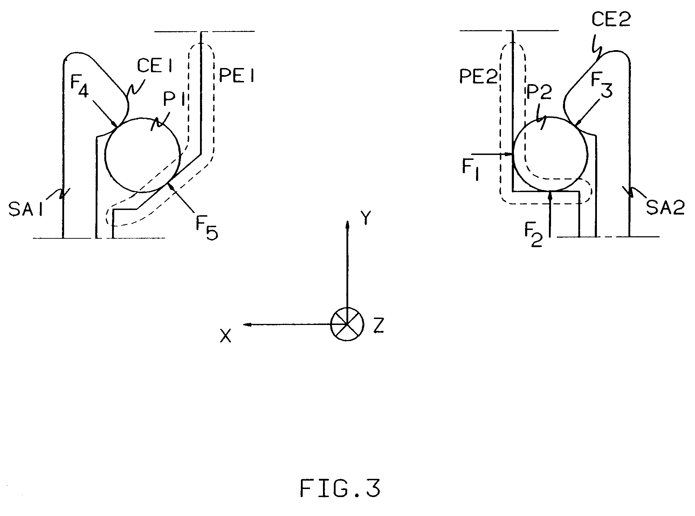

The plate LIPLS further has two indentations or positioning edges PE1 and PE2, one in each leg of the U-shape and the precisione grooves located in between, substantially like the above mentioned square indentations in the plate LIPLB. The first positioning edge PE1 is constituted by a rectangular indentation of which one side is parallel to the Y axis of the X,Y,Z axis system shown, and of which the other side is parallel to the X axis. To be noted that the X,Y,Z axis system shown is substantially the same as the one shown in Fig 1. The second positioning edge comprises three sides, the first side parallel to the X axis, the second side making an angle of 135 degrees with the latter first side and also with the third side parallel to the Y axis i.e. the third side is parallel to a bissectrice of the X and Y axis. The LIGA plate LIPLS further has two resilient arms SA1 and SA2 parallel with the Y axis and attached to the ends of the U-shape. The latter resilient arms are terminated by curved ends CE2 and CE1 which are located opposite to the postioning ends PE1 and PE2 respectively. The curved shape is such that the space between CE2 and PE2 and the space between CE1 and PE2 is converging-diverging. How the shape of the positioning ends PE1,PE2 and the curved ends CE1,CE2 is determined exactly is explained further using Fig 3. To be noted that there is no plastic layer under the resilient arms SA1 and SA2 and under the space between the curved ends CE1,CE2 and the positioning ends PE1,PE2.

The second optical connector part shown in Fig 2 is depicted upside down as indicated by the X,Y,Z axis system drawn beside. To connect the corresponding fibres, the latter connector part is pushed along the Z axis with the plate LIPLS against the plate LIPLB of the circuit board BO. This pushing force along the Z axis is for instance exerted on the substrate SU by a spring mechanisme mounted on the circuit board BO (not shown in Fig 1). The optical connector is then pushed along the Y axis so that the precision grooves of the plates LIPLB and LIPLS move towards each other and so that the cylindrical positioning pins P1 and P2 move into the space between the curved ends CE1,CE2 and the positioning ends PE1,PE2 of the plate LIPLS. The pins P1 and P2 at first push the resilient arms away from the rest of the plate LIPLS but when moving further along the Y axis the pins P1 and P2 are finally clamped to the positioning ends PE1,PE2 by action forces exerted by the resilient arms and reaction forces exerted by the positioning ends PE1,PE2.

Fig 3 shows a top view of the final position of the pins P1,P2 the positioning ends PE1,PE2 and the resilient arms SA1,SA2 with the curved ends CE1,CE2, when the pins P1,P2 are clamped and positioned with respect to the LIGA plate LIPLS. The second resilient arm SA2 exerts an action force F3 on the second pin P2 and the second positioning edge PE2 exerts two orthoghonal reation forces F1,F2 on the pin P2. The forces F1,F2 and F3 are in equilibrium and F3 is parallel to a first bissectrice of the above mentioned X,Y axis system, whereas F1 and F2 are parallel to the X and Y axis respectively. It is obvious for a person skilled in the art to determine the exact shape of the positioning end PE2 and the curved end CE2 and the resilient arm SA2 according to the diameter of the cylindrical positioning pin P2 so as to achieve the above described forces F1,F2 and F3.

The second resilient arm SA2 exerts an action force F4 on the first pin P1 and the second side of the first positioning end PE1 exerts a reaction force F5 on the pin P1. The forces F4 and F5 are parallel with the other bissectrice of the X,Y axis system and F4=-F5 i.e. the forces F4 and F5 are in equilibrium. Again, it is obvious for a person skilled in the art to determine the exact shape of PE1,SA1 and CE1 according to the diameter of the cylindrical positioning pin P1 so as to achieve the above decribed forces F4 and F5.

The converging-diverging space between the curved ends CE1,CE2 and the positioning ends PE1,PE2 has the advantage that a threshold force is to be overcome in order to clamp or retract the optical connector parts along the Y axis. Indeed, both resilient arms have to be bent away from the rest of the plate LIPLS. The fact that the first set of forces F4,F5 and the second set of forces F1,F2 and F3 are in equilibrium is an important feature of the invention. Indeed, as the cylindrical positioning pins P1 and P2 are fixed in the plastic layer PLAB, one must avoid reaction forces exerted by the board BO via the plastic layer PLAB on the pins P1,P2 because this eventually leads to so called 'cold flow' which is lasting deformation of the plastic layer. The latter deformation causes incorrect positioning with respect to the positioning pins which is of course to be avoided.

Finally, the result of the above is that the oval crossections of the fibers FISU are accurately positioned above the oval crossections of the fibers FIBO. Indeed, the plates LIPLS and LIPLB are designed so that the precision grooves of both plates in which the fibers FISU and FIBO are fixed, match, when the plate LIPLS and the positioning pins P1,P2 are clamped together as described above. In this way, a highly accurate and performant optical coupling is achieved for the fibers FISU and FIBO.

While the principles of the invention have been described above in connection with specific apparatus, it is to be clearly understood that this description is made only by way of example and not as a limitation on the scope of the invention.

## Claims

1. Optical connector for coupling optical conductors, characterized in that said optical connector includes a first (BO,PLAB,LIPLB,P1,P2,FIBO) and a second part (SU,PLAS,LIPLS,SA1,SA2,FISU) which house corresponding ones of said optical conductors (FIBO,FISU), said first and said second part have touching flat surfaces (LIPLB,LIPLS), said optical conductors being coupled via said touching flat surfaces, and that said first part includes first and second clips (SA1,PE1,CE1,SA2,CE2,PE2) adapted to clip respective first and second positioning pins (P1,P2) of said second part, said first and second pins being substantially perpendicular to said flat surfaces, said first clip exerting on said first positioning pin a first set of two forces (F4,F5) when being clamped thereon, said second clip exerting a second set of three forces (F1,F2,F3) on said second positioning pin when being clamped thereon, said first and second sets of forces being in equilibrium.

2. Optical connector according to claim 1, characterized in that said first and second positioning pins have a substantially are cylindrical form and that said second set of forces includes a first and a second force parallel to a orthogonal X and Y axis respectively, the X and Y axis plane being parallel to said touching flat surfaces, said second set further including a third force parallel to a first bissectrice of said X and Y axis, and that said first set of forces includes a fourth and a fifth force which are parallel to a second bissectrice of said X and Y axis, the longitudinal axis of said positioning pins being parallel to a Z axis orthogonal with said X and Y axis plane.

3. Optical connector according to claim 2, characterized in that said first and said second clip include a first and a second resilient arm (SA1,SA2) respectively, said first and second resilient arms having a first and a second curved end (CE1,CE2) respectively, which exert said fourth and said third force on said first and said second positioning pins respectively, said first and said second clip further including a first and a second positioning end (PE1,PE2) respectively, being located opposite to said first and said second curved end respectively, said first positioning end including a first and a second edge parallel to said X and Y axis respectively and including a third edge interconnecting said first and second edges parallel to a bissectrice of said X and Y axis, said second positioning end including a fourth and a fifth edge parallel to said X and Y axis respectively.
